# EUROPEAN PATENT APPLICATION

(11) **EP 4 701 327 A1**
(43) Date of publication of application: **25.02.2026**
(21) Application number: 23933381.8
(22) Date of filing: 18.04.2023
(51) Int. Cl.: H04W 76/28

(54) **METHOD FOR TRANSMITTING DOWNLINK CHANNEL, APPARATUS, AND READABLE STORAGE MEDIUM**

(71) Applicant: Beijing Xiaomi Mobile Software Co., Ltd., Beijing 100085 (CN)
(72) Inventor: FU, Ting, Beijing 100085 (CN)
(74) Representative: Stöckeler, Ferdinand
(86) International application number: PCT/CN2023/089011
(87) International publication number: WO 2024/216502

(57) **Abstract**

The present disclosure provides a method for transmitting a downlink channel, an apparatus, and a readable storage medium. The method comprises: when there is an overlapping time domain interval between a first time period of DTX and a running time period of a first timer, sending a physical downlink control channel (PDCCH) to a user equipment within the time domain interval, wherein the first timer is: a timer used for data retransmission in a connected discontinuous reception (C-DRX) cycle configured for the user equipment. **In** the method of the present disclosure, when the first time period of DTX of a network device overlaps with the running time period of the first timer in the C-DRX cycle of the user equipment, the network device still sends the PDCCH within the overlapping time domain interval, and the user equipment monitors the PDCCH within the time domain interval, so as to still obtain data transmission scheduling within the time domain interval, thereby ensuring data transmission performance and low transmission delay.

## Description

### TECHNICAL FIELD

The present disclosure relates to the field of wireless communication technology, and specifically to a method and apparatus for transmitting a downlink channel, and a readable storage medium.

### BACKGROUND

Network energy saving is one of topics in the release 18 (R18) of the 3rd generation partnership project (3GPP). The network energy saving project aims to study technologies to reduce energy consumption of a network device. One possible way to save network energy is a discontinuous transmission (DTX) mechanism of a cell base station. When the base station configures a cell DTX, the base station does not send part or all of downlink information on the cell during a specific time period in the cell DTX to achieve network energy saving.

R15 defines a connected discontinuous reception (C-DRX) mechanism of a user equipment (UE) in a connected state. When the UE is configured with a C-DRX cycle, the UE may not monitor the physical downlink control channel (PDCCH) during a specific time period in the C-DRX cycle to achieve UE energy saving.

### SUMMARY

The present disclosure provides a method and apparatus for transmitting a downlink channel, and a readable storage medium.

According to a first aspect of the embodiments of the present disclosure, a method for transmitting a downlink channel is provided and performed by a network device configuring a discontinuous transmission (DTX), including:
in a case where an overlapped time domain interval exists between a first time period of the DTX and a running time period of a first timer, sending a physical downlink control channel (PDCCH) to a user equipment (UE) within the overlapped time domain interval;
in which the first timer is used for a data retransmission in a connected discontinuous reception (C-DRX) cycle configured for the UE.

In some implementations, the first time period of the DTX comprises any of:
a time period used for not sending at least part of downlink information in the DTX;
a time period during which the network device is in a non-active state in the DTX;
a time period during which the network device is in an off state in the DTX; or
a time period during which the network device is in an energy-saving state in the DTX.

In some implementations, in a case where the network device schedules data on a single carrier, sending the PDCCH to the UE within the overlapped time domain interval comprises:
sending the PDCCH to the UE on a first carrier within the overlapped time domain interval, wherein the first carrier is a carrier where a data transmission failure exists.

In some implementations, in a case where the network device is configured with cross-carrier scheduling, sending the PDCCH to the UE within the overlapped time domain interval comprises:
sending the PDCCH to the UE on a second carrier within the overlapped time domain interval, wherein the second carrier is the same as or different from a first carrier where a data transmission failure exists.

In some implementations, the second carrier is a carrier not applicable to a cell DTX of the network device.

In some implementations, the second carrier is a carrier applicable to the C-DRX cycle of the UE.

In some implementations, the method further comprises:
determining the second carrier according to a first carrier group applicable to the C-DRX cycle of the UE and a second carrier group applicable to a cell DTX of the network device, wherein the second carrier is a carrier in a third carrier group, and the carrier in the third carrier group belongs to the first carrier group but does not belong to an intersection of the first carrier group and the second carrier group.

In some implementations, in a case where the third carrier group is an empty set, the second carrier is the same as the first carrier.

In some implementations, the method further comprises:
not sending the PDCCH on a second carrier group applicable to a cell DTX of the network device within the overlapped time domain interval.

In some implementations, the first timer comprises at least one of:
a retransmission timer corresponding to a downlink hybrid automatic repeat request (HARQ) process; or
a retransmission timer corresponding to an uplink HARQ process.

In some implementations, the PDCCH comprises at least a PDCCH used for carrying downlink control information (DCI) scheduling a data transmission.

According to a second aspect of the embodiments of the present disclosure, a method for not sending a downlink channel is provided and performed by a network device configuring a discontinuous transmission (DTX), including:
in a case of being configured with cross-carrier scheduling and a third carrier group being an empty set, not sending a physical downlink control channel (PDCCH) within an overlapped time domain interval between a first time period of the DTX and a running time period of a first timer;
in which a carrier in the third carrier group belongs to a first carrier group applicable to a connected discontinuous reception (C-DRX) cycle of a user equipment (UE) but does not belong to an intersection of the first carrier group and a second carrier group applicable to a cell DTX of the network device.

In some implementations, the first timer comprises at least one of:
a retransmission timer corresponding to a downlink hybrid automatic repeat request (HARQ) process; or
a retransmission timer corresponding to an uplink HARQ process.

In some implementations, the PDCCH comprises at least a PDCCH used for carrying downlink control information (DCI) scheduling a data transmission.

According to a third aspect of the embodiments of the present disclosure, a method for receiving a downlink channel is provided, performed by a user equipment (UE), including:
in a case where an overlapped time domain interval exists between a first time period of a discontinuous transmission (DTX) configured by a network device and a running time period of a first timer, receiving a physical downlink control channel (PDCCH) sent by the network device within the overlapped time domain interval;
in which the first timer is used for a data retransmission in a connected discontinuous reception (C-DRX) cycle configured for the UE.

In some implementations, the first time period of the DTX comprises any of:
a time period used for not sending at least part of downlink information in the DTX;
a time period during which the network device is in a non-active state in the DTX;
a time period during which the network device is in an off state in the DTX; or
a time period during which the network device is in an energy-saving state in the DTX.

In some implementations, in a case where the network device schedules data on a single carrier, receiving the PDCCH sent by the network device within the overlapped time domain interval comprises:
receiving the PDCCH sent by the network device on a first carrier within the overlapped time domain interval, wherein the first carrier is a carrier where a data transmission failure exists.

In some implementations, in a case where the network device is configured with cross-carrier scheduling, receiving the PDCCH sent by the network device within the overlapped time domain interval comprises:
receiving the PDCCH sent by the network device on a second carrier within the overlapped time domain interval, wherein the second carrier is the same as or different from a first carrier where a data transmission failure exists.

In some implementations, the second carrier is a carrier not applicable to a cell DTX of the network device.

In some implementations, the second carrier is a carrier applicable to the C-DRX cycle of the UE.

In some implementations, the method further comprises:
determining the second carrier according to a first carrier group applicable to the C-DRX cycle of the UE and a second carrier group applicable to a cell DTX of the network device, wherein the second carrier is a carrier in a third carrier group, and the carrier in the third carrier group belongs to the first carrier group but does not belong to an intersection of the first carrier group and the second carrier group.

In some implementations, in a case where the third carrier group is an empty set, the second carrier is the same as the first carrier.

In some implementations, the method further comprises:
not receiving the PDCCH on a second carrier group applicable to a cell DTX of the network device within the overlapped time domain interval.

In some implementations, the first timer comprises at least one of:
a retransmission timer corresponding to a downlink hybrid automatic repeat request (HARQ) process; or
a retransmission timer corresponding to an uplink HARQ process.

In some implementations, the PDCCH comprises at least a PDCCH used for carrying downlink control information (DCI) scheduling a data transmission.

According to a fourth aspect of the embodiments of the present disclosure, a method for not receiving a downlink channel is provided, performed by a user equipment (UE), including:
in a case where a network device is configured with cross-carrier scheduling and a third carrier group is an empty set, not receiving a physical downlink control channel (PDCCH) within an overlapped time domain interval between a first time period of a discontinuous transmission (DTX) configured by the network device and a running time period of a first timer;
in which a carrier in the third carrier group belongs to a first carrier group applicable to a connected discontinuous reception (C-DRX) cycle of the UE but does not belong to an intersection of the first carrier group and a second carrier group applicable to a cell DTX of the network device.

In some implementations, the first timer comprises at least one of:
a retransmission timer corresponding to a downlink hybrid automatic repeat request (HARQ) process; or
a retransmission timer corresponding to an uplink HARQ process.

In some implementations, the PDCCH comprises at least a PDCCH used for carrying downlink control information (DCI) scheduling a data transmission.

According to a fifth aspect of the embodiments of the present disclosure, a communication apparatus is provided. The apparatus can be used to execute steps that are performed by a network device in the first aspect or any possible implementations of the first aspect. The network device can implement each function in the above methods in the form of a hardware structure, a software module, or a hardware structure plus a software module.

When the apparatus shown in the fifth aspect is implemented through the software module, the apparatus may include a transceiver module, in which the transceiver module can be used to support the communication apparatus to communicate.

When executing the steps of the above first aspect, the network device configures a discontinuous transmission (DTX), and the transceiver module is configured to send a PDCCH to a UE within an overlapped time domain interval in a case where the overlapped time domain interval exists between a first time period of the DTX and a running time period of a first timer;
in which the first timer is used for a data retransmission in a connected discontinuous reception (C-DRX) cycle configured for the UE.

According to a sixth aspect of the embodiments of the present disclosure, a communication apparatus is provided. The apparatus can be used to execute steps that are performed by a network device in the second aspect or any possible implementations of the second aspect. The network device can implement each function in the above methods in the form of a hardware structure, a software module, or a hardware structure plus a software module.

When the apparatus shown in the sixth aspect is implemented through the software module, the apparatus may include a transceiver module, in which the transceiver module can be used to support the communication apparatus to communicate.

When executing the steps of the above second aspect, the network device configures a discontinuous transmission (DTX), and the transceiver module is configured to not send a PDCCH within an overlapped time domain interval between a first time period of the DTX and a running time period of a first timer in a case of being configured with cross-carrier scheduling and a third carrier group being an empty set;
in which a carrier in the third carrier group belongs to a first carrier group applicable to a connected discontinuous reception (C-DRX) cycle of a user equipment (UE) but does not belong to an intersection of the first carrier group and a second carrier group applicable to a cell DTX of the network device.

According to a seventh aspect of the embodiments of the present disclosure, an apparatus for receiving a downlink channel is provided. The apparatus can be used to execute steps that are performed by a UE in the third aspect or any possible implementations of the third aspect. The UE can implement each function in the above methods in the form of a hardware structure, a software module, or a hardware structure plus a software module.

When the apparatus shown in the seventh aspect is implemented through the software module, the apparatus may include a transceiver module, in which the transceiver module can be used to support the communication apparatus to communicate.

When executing the steps of the above third aspect, the transceiver module is configured to, in a case where an overlapped time domain interval exists between a first time period of a discontinuous transmission (DTX) configured by a network device and a running time period of a first timer, receive a physical downlink control channel (PDCCH) sent by the network device within the overlapped time domain interval
in which the first timer is used for a data retransmission in a connected discontinuous reception (C-DRX) cycle configured for the UE.

According to an eighth aspect of the embodiments of the present disclosure, an apparatus for not receiving a downlink channel is provided. The apparatus can be used to execute steps that are performed by a UE in the fourth aspect or any possible implementations of the fourth aspect. The UE can implement each function in the above methods in the form of a hardware structure, a software module, or a hardware structure plus a software module.

When the apparatus shown in the eighth aspect is implemented through the software module, the apparatus may include a transceiver module, in which the transceiver module can be used to support the communication apparatus to communicate.

When executing the steps of the above fourth aspect, the transceiver module is configured to, in a case where a network device is configured with cross-carrier scheduling and a third carrier group is an empty set, not receive a physical downlink control channel (PDCCH) within an overlapped time domain interval between a first time period of a discontinuous transmission (DTX) configured by the network device and a running time period of a first timer;
in which a carrier in the third carrier group belongs to a first carrier group applicable to a connected discontinuous reception (C-DRX) cycle of the UE but does not belong to an intersection of the first carrier group and a second carrier group applicable to a cell DTX of the network device.

According to a ninth aspect of the embodiments of the present disclosure, a network device is provided, including: a processor and a memory. The memory is configured to store a computer program. The processor is configured to execute the computer program to perform the method of any possible implementation of the first aspect or the second aspect.

According to a tenth aspect of the embodiments of the present disclosure, a UE is provided, including: a processor and a memory. The memory is configured to store a computer program. The processor is configured to execute the computer program to perform the method of any possible implementation of the third aspect or the fourth aspect.

According to an eleventh aspect of the embodiments of the present disclosure, a computer-readable storage medium having instructions (also referred to as computer program, or program) stored thereon is provided. When the instructions are executed by a computer, the computer is caused to perform the method of any possible implementation of the first aspect or the second aspect.

According to a twelfth aspect of the embodiments of the present disclosure, a computer-readable storage medium having instructions (also referred to as computer program, or program) stored thereon is provided. When the instructions are executed by a computer, the computer is caused to perform the method of any possible implementation of the third aspect or the fourth aspect.

It is to be understood that the foregoing general description and the following detailed description are exemplary and explanatory only and are not restrictive of the present disclosure.

### BRIEF DESCRIPTION OF THE DRAWINGS

The drawings described herein are used to provide a further understanding of the embodiments of the present disclosure and constitute a part of the present disclosure. The illustrative embodiments of the present disclosure and their descriptions are used to explain the embodiments of the present disclosure and do not constitute a limitation on the embodiments of the present disclosure, in which:
the accompanying drawings herein are incorporated in and constitute a part of the specification, illustrate embodiments consistent with the embodiments of the present disclosure, and together with the description, serve to explain principles of the embodiments of the present disclosure.
FIG. 1 is a schematic diagram of a wireless communication system according to an embodiment of the present disclosure;
FIG. 2 is an interactive flowchart of a method for transmitting a downlink channel according to an embodiment of the present disclosure;
FIG. 3 is a flowchart of a method for sending a downlink channel according to an embodiment of the present disclosure;
FIG. 4 is a flowchart of a method for sending a downlink channel according to an embodiment of the present disclosure;
FIG. 5 is a flowchart of a method for sending a downlink channel according to an embodiment of the present disclosure;
FIG. 6 is a flowchart of a method for sending a downlink channel according to an embodiment of the present disclosure;
FIG. 7 is a flowchart of a method for receiving a downlink channel according to an embodiment of the present disclosure;
FIG. 8 is a block diagram of a communication apparatus according to an embodiment of the present disclosure;
FIG. 9 is a block diagram of a network device according to an embodiment of the present disclosure;
FIG. 10 is a block diagram of a communication apparatus according to an embodiment of the present disclosure; and
FIG. 11 is a block diagram of a UE according to an embodiment of the present disclosure.

### DETAILED DESCRIPTION

The embodiments of the present disclosure are now further described in conjunction with the accompanying drawings and specific implementations.

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with aspects related to the present disclosure as recited in the appended claims.

The terms used in the embodiments of the present disclosure are merely for the purpose of describing a particular embodiment and are not intended to limit the embodiments of the present disclosure. The terms "a" and "the" in the singular form as used in the embodiments of the present disclosure and the accompanying claims are also intended to include the majority form, unless the context clearly indicates otherwise. It should also be understood that the term "and/or" as used herein refers to and encompasses any or all possible combinations of one or more associated listed items.

It is understood that although the terms first, second, third, etc. may be used to describe various information in the embodiments of the present disclosure, such information should not be limited to these terms. These terms are used only to distinguish the same type of information from one to another. For example, without leaving the scope of the present disclosure, the first information may also be referred to as the second information, and similarly, the second information may also be referred to as the first information. Depending on the context, the words "if" and "provided" used here can be interpreted as "when...", "in a case where..." or "in response to determining..."

The embodiments of the present disclosure are described in detail below, and examples of the embodiments are shown in the accompanying drawings, in which the same or similar reference numerals throughout represent the same or similar elements. The embodiments described below with reference to the accompanying drawings are exemplary and are intended to explain the present disclosure, and cannot be understood as a limitation on the present disclosure.

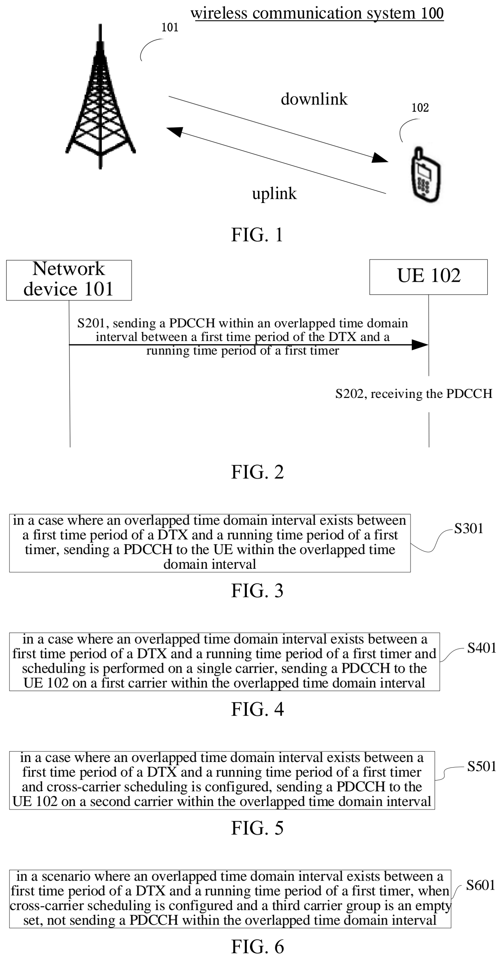

**As** illustrated in FIG. 1, a method for transmitting a downlink channel provided in an embodiment of the present disclosure may be applied to a wireless communication system 100, which may include a network device 101 and a user equipment (UE) 102. The UE 102 is configured to support carrier aggregation and may be connected to multiple carrier components of the network device 101, including a primary carrier component and one or more secondary carrier components.

**It** should be understood that the above wireless communication system 100 can be applied to both low-frequency scenarios and high-frequency scenarios. Application scenarios of the wireless communication system 100 include, but are not limited to, long term evolution (LTE) systems, LTE frequency division duplex (FDD) systems, LTE time division duplex (TDD) systems, worldwide interoperability for micro wave access (WiMAX) communication systems, cloud radio access network (CRAN) systems, future fifth-generation (5G) systems, new radio (NR) communication systems, or future evolved public land mobile networks (PLMN) systems, etc.

The UE 102 shown above may be a terminal, an access terminal, a terminal unit, a terminal station, a mobile station (MS), a remote station, a remote terminal, a mobile terminal, a wireless communication device, a terminal agent or a terminal device, etc. The UE 102 may have a wireless transceiver function, and it may communicate with one or more network devices of one or more communication systems (such as wireless communication) and receive network services provided by the network device, where the network device includes but is not limited to the illustrated network device 101.

The UE 102 can be a cellular phone, a cordless phone, a session initiation protocol (SIP) phone, a wireless local loop (WLL) station, a personal digital assistant (PDA) device, a handheld device with a wireless communication function, a computing device or other processing device connected to a wireless modem, a vehicle-mounted device, a wearable device, a terminal device in a future 5G network, or a terminal device in a future evolved PLMN network, etc.

The network device 101 may be an access network device (or access network point). The access network device refers to a device that provides a network access function, such as a radio access network (RAN) base station, etc. The network device 101 may specifically include a base station (BS), or a base station and a wireless resource management device for controlling the base station, etc. The network device 101 may also include a relay station (relay device), an access point, a base station in a future 5G network, a base station in a future evolved PLMN network, or an NR base station, etc. The network device 101 may be a wearable device or a vehicle-mounted device. The network device 101 may also be a communication chip with a communication module.

For example, the network device 101 includes but is not limited to: a next-generation base station (gnodeB, gNB) in 5G, an evolved node B (eNB) in an LTE system, a radio network controller (RNC), a node B (NB) in a wideband code division multiple access (WCDMA) system, a wireless controller in a CRAN system, a base station controller (BSC), a base transceiver station (BTS) in a global system for mobile communications (GSM) system or a code division multiple access (CDMA) system, a home base station (for example, home evolved nodeB, or home node B, HNB), a baseband unit (BBU), a transmitting and receiving point (TRP), a transmitting point (TP) or a mobile switching center, etc.

The UE 102 needs to be in an active time period (i.e., active time) during a part of a C-DRX cycle. The active time period of the UE 102 may overlap with a time period during which the network device 101 does not send a downlink channel in the DTX.

The embodiments of the present disclosure provide a method for transmitting a downlink channel. With reference to FIG. 2, FIG. 2 shows a flowchart of a method for transmitting a downlink channel according to an embodiment. As shown in FIG. 2, the method includes steps S201 to S202, specifically.

**At** step S201, in a case where an overlapped time domain interval exists between a first time period of the DTX and a running time period of a first timer, the network device 101 sends a physical downlink control channel (PDCCH) to the UE 102 within the overlapped time domain interval.

In some implementations, the network device 101 configures the DTX.

In some implementations, the first time period of the DTX includes any of:
a time period used for not sending at least part of downlink information in the DTX;
a time period during which the network device 101 is in a non-active state in the DTX;
a time period during which the network device is in an off state in the DTX; or
a time period during which the network device is in an energy-saving state in the DTX.

In some embodiments, the time period during which at least part of the downlink information is not sent in a cell DTX can be understood as a non-active time period of the network device 101, and a time period during which the downlink information is normally sent can be understood as an active time period of the network device 101.

It can be understood that the DTX of the network device 101 can be configured in units of carriers (or cells), for example, a corresponding DTX is suitable for one or more carriers, which can be called the cell DTX.

In an example, the cell DTX of the network device 101 may be periodic. For example, one DTX cycle includes a first time period and a second time period. The first time period is a time period configured in the DTX cycle for not sending at least part of the downlink information, which may also be referred to as a DTX-off time period, or a time period during which the network device is an off state (i.e., the network device is off). For example, the network device 101 may not send the PDCCH within the first time period to achieve energy saving. The first time period may also be understood as a time period during which the network device is in an energy-saving state. The second time period is a time period configured in the DTX cycle for normally sending the downlink information, or may be referred to as a DTX-on time period, or a time period during which the network device is in an on state (i.e., the network device is on). For example, the network device 101 may send the PDCCH normally within the second time period according to a scheduling requirement. The second time period may also be understood as a time period during which the network device is in a normal working state, or a time period during which the network device is in a non-energy-saving state.

In another example, the cell DTX of the network device 101 is not periodic. For example, the network device 101 dynamically indicates the first time period of the cell DTX, which can also be understood as a DTX-off period, or a time period during which the network device 101 is off, or a time period during which the network device 101 is in a power-saving state.

The network device 101 may dynamically indicate a starting offset and a duration corresponding to the first time period of the DTX by sending DCI or medium access control control element (MAC CE) signaling.

In some possible implementations, the running time period of the first timer refers to: a time period from when the first timer starts to when the first timer ends (i.e., times out).

In some possible implementations, a time domain interval formed by an overlap of the first time period and the running time period of the first timer may include one or more time slots, or the time domain interval includes several milliseconds (ms).

In some possible implementations, a time period during which the UE 102 does not monitor a part of the downlink information such as PDCCH in the C-DRX cycle is a non-active time period (i.e., non-active time) of the C-DRX; a time period during which the UE 102 normally monitors the downlink information such as PDCCH is an active time period of the C-DRX.

In an example, one C-DRX cycle may include: a third time period which is also referred to as an off duration, and a fourth time period which is also referred to as an on duration. The UE 102 is in the active time period during the on duration.

In this example, the network device 101 can configure time domain parameters of the C-DRX, such as at least one of the parameters such as a C-DRX cycle, a time length of the off duration of the C-DRX, or a time length of the on duration of the C-DRX. The C-DRX cycle can be configured to be a long cycle, or multiple short cycles nested in a long cycle. If the UE 102 is configured with both the long cycle C-DRX and the short cycle C-DRX, after the short cycle C-DRX is started, the UE 102 monitors the downlink information according to the long cycle C-DRX after a short cycle timer (drx-ShortCycleTimer) times out.

In some possible implementations, the UE 102 is in an active time period during the running of the following timer, that is, the UE 102 needs to monitor a downlink channel (such as monitoring the PDCCH) during the running of the following timer:
a timer corresponding to the on duration (drx-onDurationTimer);
a non-active timer (drx-InactivityTimer);
a retransmission timer corresponding to a downlink hybrid automatic repeat request (HARQ) process (drx-RetransmissionTimerDL);
a retransmission timer corresponding to an uplink HARQ process (drx-RetransmissionTimerUL).

Each time the on duration is reached, the timer will start, and when the timer ends, it indicates that the on duration is ended.

The timer drx-InactivityTimer is started each time the UE 102 receives downlink control information (DCI) for scheduling new uplink or downlink transmission data, and is used to indicate a duration after receiving the new transmission data.

The timer drx-RetransmissionTimerDL is used for a downlink HARQ process other than broadcasting, and is used to indicate a maximum duration from receiving data of the process to receiving downlink retransmission data of the process.

The timer drx-RetransmissionTimerUL is used for an uplink HARQ process, and is used to indicate a maximum duration from receiving data of the process to receiving uplink data for uplink retransmission of the process.

It can be understood that different HARQ processes have corresponding identifiers (HARQ IDs). Each DL HARQ process has a corresponding drx-HARQ-RTT-TimerDL timer. If the drx-HARQ-RTT-TimerDL timer does not end, the corresponding HARQ process will not be used for retransmission.

For example, if the drx-HARQ-RTT-TimerDL timer corresponding to the DL HARQ process ends and the UE 102 feeds back NACK, it indicates that the network device 101 needs to retransmit data. In this case, the timer drx-RetransmissionTimerDL will start. During the running time period of the drx-RetransmissionTimerDL, the UE 102 needs to monitor retransmission data DCI corresponding to the DL HARQ process to ensure that the incorrectly received data can be retransmitted in time, and monitors new transmission data DCI of other DL HARQ processes.

For another example, if the drx-HARQ-RTT-TimerDL timer ends, the UE 102 will start the drx-RetransmissionTimerUL to monitor the PDCCH during the running time period of the drx-RetransmissionTimerUL to obtain possible uplink data retransmission scheduling to ensure that the incorrectly received data can be retransmitted in time. The UE 102 monitors the PDCCH during the running time period of the drx-RetransmissionTimerUL, if the UE 102 receives the DCI for retransmission data, then the UE 102 retransmits the data; if the UE 102 receives the DCI for new transmission data, the UE 102 does not need to retransmit the data.

In some possible implementations, the first timer is a timer used for data retransmission in a C-DRX cycle configured for the UE 102.

In some possible implementations, the first timer includes at least one of:
a retransmission timer corresponding to a downlink HARQ process (drx-Retransmission TimerDL);
a retransmission timer corresponding to an uplink HARQ process (drx-RetransmissionTimerUL).

In some possible implementations, the network device 101 may be configure a C-DRX cycle for which one or more carriers are suitable. For example, the UE 102 may be in the C-DRX cycle on the one or more carriers.

In some possible implementations, for the DTX of the network device 101, the network device 101 may be in the DTX on the one or more carriers.

In an example, when the UE 102 may be in the C-DRX cycle on the one or more carriers, and the network device 101 is in the first time period of the cell DTX, the active time period corresponding to the UE 102 may overlap with the first time period in the time domain.

In this example, within the overlapped time domain interval, the network device 101 still sends the PDCCH to avoid affecting data transmission due to the network device 101 being in the first time period and not sending DCI for scheduling the data transmission in time, such as avoiding the increase in overall data transmission delay caused by untimely sending of DCI.

In some implementations, the overlap between the first time period and the running time period of the first timer may refer to that a portion of the running time period of the first timer overlaps with the first time period, and in this case, the overlapped time domain interval includes the portion of the running time period of the first timer.

In some implementations, the overlap between the first time period and the running time period of the first timer may refer to that the entire running time period of the first timer overlaps with the first time period, and in this case, the overlapped time domain interval includes the entire running time period of the first timer.

In some implementations, the PDCCH sent by the network device 101 within the time domain interval includes a PDCCH for carrying DCI scheduling a data transmission.

In an example, the DCI scheduling the data transmission may be, for example, DCI scheduling a data retransmission.

It can be understood that the DCI scheduling the data retransmission has the same DCI format as the DCI scheduling a new data transmission, and a new data indicator (NDI) bit value in the DCI may be used to determine whether the DCI schedules retransmission data or new transmission data. For example, if the NDI bit values of the current DCI and the previous DCI of the same HARQ process are flipped, such as the NDI bit value in the previous DCI is 0 and the NDI bit value in the current DCI is 1, then the current DCI schedules retransmission data; and if the NDI bit values of the two corresponding DCIs of the same HARQ process are not flipped, then the current DCI schedules new transmission data.

In some implementations, the network device 101 may be configured with cross-carrier scheduling.

The network device 101 may support a capability of single-carrier scheduling and a capability of cross-carrier scheduling. If the network device 101 is configured with cross-carrier scheduling, the network device 101 may perform cross-carrier scheduling; if the network device 101 is not configured with cross-carrier scheduling, the network device 101 may perform scheduling on a single carrier.

For example, in a data retransmission scenario, if the network device 101 is not configured with cross-carrier scheduling, such as scheduling on a single carrier, the network device 101 can only send the PDCCH on a first carrier where a data transmission failure exists, and the UE 102 correspondingly monitors the PDCCH on the first carrier.

For another example, in a data retransmission scenario, if the network device 101 is configured with cross-carrier scheduling, the network device 101 may send the PDCCH on a carrier other than the first carrier, such as sending the PDCCH on a second carrier, and the UE 102 correspondingly monitors the PDCCH on the second carrier. Regarding the possible implementation of the second carrier, reference may be made to the description of the following embodiments, which will not be repeated here.

The first carrier is a carrier applicable to the cell DTX of the network device 101, and the first carrier is also a carrier applicable to the C-DRX of the UE 102. In this scenario, an overlapped time domain interval exists between the first time period of the DTX of the network device 101 on the first carrier and the running time period of the first timer in the C-DRX cycle of the UE 102 on the first carrier.

At step S202, the UE 102 receives the PDCCH within the time domain interval.

In some implementations, the UE 102 monitors and/or receives the PDCCH within the time domain interval. For example, the UE 102 still monitors the PDCCH, such as DCI scheduling a data retransmission or a new data transmission, within the time domain interval where the running time period of the first timer overlaps with the first time period.

In an embodiment of the present disclosure, when the first time period of the DTX of the network device 101 overlaps with the running time period of the first timer in a C-DRX cycle of the UE 102, the network device 101 still sends the PDCCH within the overlapped time domain interval, and the UE 102 monitors the PDCCH within the time domain interval so as to still obtain data transmission scheduling within the time domain interval, thereby ensuring data transmission performance and low transmission delay.

An embodiment of the present disclosure provides a method for sending a downlink channel, which is performed by the network device 101. With reference to FIG. 3, FIG. 3 shows a flowchart of a method for sending a downlink channel according to an embodiment. As shown in FIG. 3, the method includes step S301, specifically.

At step S301, in a case where an overlapped time domain interval exists between a first time period of a DTX and a running time period of a first timer, the network device 101 sends a physical downlink control channel (PDCCH) to the UE 102 within the overlapped time domain interval.

In some implementations, the network device 101 configures the DTX.

In some implementations, the first time period of the DTX includes any of:
a time period used for not sending at least part of downlink information in the DTX;
a time period during which the network device 101 is in a non-active state in the DTX;
a time period during which the network device is in an off state in the DTX; or
a time period during which the network device is in an energy-saving state in the DTX.

In an example, the first time period is a time period configured in a cell DTX for not sending at least part of downlink information by the network device 101, or is called a DTX-off time period.

In some possible implementations, in this embodiment, the network device 101 is in an active time period within the time domain interval, that is, the network device 101 needs to send the PDCCH.

In some possible implementations, the UE 102 monitors and/or receives the PDCCH within the time domain interval.

In some possible implementations, the first timer is a timer used for a data retransmission in a C-DRX cycle configured for the UE 102.

In some possible implementations, the first timer includes at least one of:
a retransmission timer corresponding to a downlink HARQ process;
a retransmission timer corresponding to an uplink HARQ process.

In an example, the retransmission timer corresponding to the downlink HARQ process is, for example, drx-RetransmissionTimerDL. In combination with the description of the foregoing embodiment, the retransmission timer may start after the UE 102 feeds back NACK, that is, after determining that the downlink transmission fails, and the network device 101 sends DCI scheduling the data retransmission within the time domain interval. The UE 102 monitors the PDCCH within the time domain interval to obtain the DCI scheduling the data retransmission, so as to ensure that the retransmitted downlink data can be obtained in time.

In an example, the retransmission timer corresponding to the uplink HARQ process is, for example, drx-RetransmissionTimerUL. In combination with the description of the foregoing embodiment, if the retransmission timer is started, the uplink transmission may fail or may not fail. If the data retransmission is required, the network device 101 may perform data retransmission scheduling within the time domain interval. The UE 102 monitors the PDCCH within the time domain interval to determine whether uplink data needs to be retransmitted.

In some possible implementations, the PDCCH includes at least a PDCCH for carrying the DCI scheduling the data transmission.

In an example, the PDCCH sent by the network device 101 within the overlapped time domain interval may be all PDCCHs.

In an example, the PDCCH sent by the network device 101 within the overlapped time domain interval may include the PDCCH for carrying the DCI scheduling the data retransmission.

The network device 101 may configure different PDCCHs, and different PDCCHs may carry DCIs of corresponding DCI types. In other words, the PDCCHs may be classified into different types according to the different types of the carried DCIs.

For example, some PDCCH resources only carry DCI of a specific type. For example, if the DCI types are distinguished by DCI sending methods, the PDCCH may carry multicast DCI or unicast DCI. For another example, if the DCI types are distinguished by contents carried in DCIs, the PDCCH may carry DCI scheduling the data transmission or may not carry the DCI scheduling the data transmission.

The PDCCH for carrying the DCI scheduling the data transmission is, for example, the PDCCH for carrying DCI scheduling the data retransmission. In combination with the description of the foregoing embodiment, the DCI scheduling the data retransmission has the same DCI format as the DCI scheduling new data transmission, and the NDI in the DCI can be used to determine whether the DCI schedules the data retransmission or the new transmission.

In an example, the network device 101 may not send the PDCCH that cannot carry DCI scheduling data within the overlapped time domain interval. The UE 102 may also not monitor the PDCCH within the time domain interval.

In some possible implementations, the time domain interval includes one of the following:
an overlapped range formed by a partial running time period of the first timer and the first time period; or
an overlapped range formed by an entire running time period of the first timer and the first time period.

In an example, when the time domain interval includes an overlapped range formed by a part of the running time period of the first timer and the first time period, the time domain interval includes the partial running time period of the first timer, then the network device 101 sends the PDCCH within the partial running time period, and the UE 102 monitors the PDCCH within the partial running time period.

In an example, when the time domain interval includes the overlapped range formed by the entire running time period of the first timer and the first time period, the time domain interval includes the entire running time period of the first timer, then the network device 101 sends the PDCCH within the entire running time period of the first timer, and the UE 102 monitors the PDCCH within the entire running time period.

In an embodiment of the present disclosure, when the first time period of the DTX of the network device 101 overlaps with the running time period of the first timer in the C-DRX cycle of the UE 102, the network device 101 still sends the PDCCH within the overlapped time domain interval, so that the UE 102 can obtain data transmission scheduling in time within the time domain interval, thereby ensuring data transmission performance and low transmission delay.

An embodiment of the present disclosure provides a method for sending a downlink channel, which is performed by the network device 101. With reference to FIG. 4, FIG. 4 shows a flowchart of a method for sending a downlink channel according to an embodiment. As shown in FIG. 4, the method includes step S401, specifically.

At step S401, in a case where an overlapped time domain interval exists between a first time period of a DTX and a running time period of a first timer and the network device 101 schedules data on a single carrier, the network device 101 sends a physical downlink control channel (PDCCH) to the UE 102 on a first carrier within the overlapped time domain interval.

In some possible implementations, the network device 101 supports a capability of cross-carrier scheduling. If the network device 101 is not configured with cross-carrier scheduling, the network device 101 may perform scheduling on a single carrier.

In some possible implementations, the first carrier is a carrier where a data transmission failure exists, for example the data transmission failure exists on the first carrier, or data loss occurs on the first carrier.

In some possible implementations, the first carrier is applicable to both a cell DTX of the network device 101 and a C-DRX of the UE 102. For example, on the first carrier, the network device 101 is in the cell DTX, and the UE 102 is in the C-DRX cycle. The time domain interval is an overlapped interval between the first time period during which the network device 101 is in the DTX on the first carrier and the running time period of the first timer.

In some possible implementations, the UE 102 monitors and/or receives the PDCCH in the time domain interval and on the first carrier.

In some possible implementations, the first timer includes at least one of:
a retransmission timer corresponding to a downlink HARQ process;
a retransmission timer corresponding to an uplink HARQ process.

In an example, if the data transmission failure occurs on the first carrier, such as downlink data transmission failure, the UE 102 may feedback NACK to the network device 101. After the NACK is fed back, the retransmission timer corresponding to the downlink HARQ process starts. In the overlapped time domain interval, such as a partial running time period or an entire running time period of the retransmission timer, the network device 101 sends the PDCCH on the first carrier, and the UE 102 monitors and receives the PDCCH on the first carrier.

It can be understood that the PDCCH may carry DCI for scheduling the data retransmission, and the DCI includes the same data as the data that failed to be transmitted on the first carrier.

In the embodiments of the present disclosure, when the network device 101 is not configured with cross-carrier scheduling, the data retransmission can be scheduled on a single carrier. For the data transmission failure occurring on the first carrier, the network device 101 still needs to perform retransmission scheduling on the first carrier within the overlapped time domain interval, such as retransmitting the data that failed to be transmitted, so that the UE 102 obtains the same retransmitted data on the first carrier.

An embodiment of the present disclosure provides a method for sending a downlink channel, which is performed by the network device 101. With reference to FIG. 5, FIG. 5 shows a flowchart of a method for sending a downlink channel according to an embodiment. As shown in FIG. 5, the method includes step S501, specifically.

At step S501, in a case where an overlapped time domain interval exists between a first time period of a DTX and a running time period of a first timer and the network device 101 is configured with cross-carrier scheduling, the network device 101 sends a physical downlink control channel (PDCCH) to the UE 102 on a second carrier within the overlapped time domain interval.

In some possible implementations, the first carrier is a carrier where a data transmission failure exists.

In some possible implementations, the first carrier is applicable to both a cell DTX of the network device 101 and a C-DRX of the UE 102. For example, on the first carrier, the network device 101 is in the cell DTX, and the UE 102 is in the C-DRX cycle.

In some possible implementations, the second carrier is the same as or different from the first carrier.

In some possible implementations, the second carrier is a carrier not applicable to the cell DTX of the network device 101.

In some possible implementations, the second carrier is a carrier applicable to the C-DRX cycle of the UE 102.

In some possible implementations, the second carrier is determined according to a third carrier group.

The third carrier group is determined according to a first carrier group applicable to the C-DRX and a second carrier group applicable to the cell DTX.

In some possible implementations, the method further includes step S501', specifically.

At step S501', the network device 101 determines the second carrier according to the first carrier group applicable to the C-DRX cycle of the UE 102 and the second carrier group applicable to the cell DTX of the network device 101. The second carrier is a carrier in the third carrier group. The carrier in the third carrier group belongs to the first carrier group but does not belong to an intersection of the first carrier group and the second carrier group.

In an example, the third carrier group includes at least one carrier.

In an example, the first carrier group includes at least one carrier, the second carrier group includes at least one carrier. For example, each of the first carrier group and the second carrier group includes the first carrier.

In some embodiments, depending on whether the third carrier group is an empty set, the second carrier may have different possibilities.

In some possible implementations, the second carrier is a carrier in the third carrier group. The first carrier group includes at least one carrier different from the first carrier.

In the implementations, the third carrier group is not an empty set, and includes at least one carrier. In this case, the second carrier is different from the first carrier. The second carrier is any carrier in the third carrier group.

In an example, within the overlapped time domain interval, the network device 101 sends the PDCCH on the third carrier group, such as sending the PDCCH for carrying DCT scheduling the data retransmission on the second carrier in the third carrier group. The UE 102 correspondingly monitors the PDCCH on the third carrier group to obtain possible data retransmission scheduling.

In some possible implementations, when the third carrier group is an empty set, the second carrier is the same as the first carrier.

In the implementations, when the third carrier group is an empty set, the second carrier is the same as the first carrier.

In the implementations, the third carrier group determined according to the first carrier group and the second carrier group is an empty set, so the network device 101 may use the first carrier to send the PDCCH for carrying DCI scheduling the data transmission, such as the PDCCH for carrying DCI for scheduling the data retransmission. It can be understood that the retransmitted data is the same data as the data that failed to be transmitted.

In the implementations, reference may be made to the implementations in which the cross-carrier scheduling is not configured.

In an embodiment of the present disclosure, when the network device 101 is configured with cross-carrier scheduling, for the data transmission failure occurring on the first carrier, the network device 101 may perform retransmission scheduling on the other carrier within the overlapped time domain interval, so that the UE 102 obtains retransmitted data on the other carrier.

An embodiment of the present disclosure provides a method for sending a downlink channel, which is performed by the network device 101. The method includes steps S501-S502, specifically.

At step S501, in a case where an overlapped time domain interval exists between a first time period of a DTX and a running time period of a first timer and the network device 101 is configured with cross-carrier scheduling, the network device 101 sends a physical downlink control channel (PDCCH) to the UE 102 on a second carrier within the overlapped time domain interval.

Regarding the implementation of step S501, reference may be made to the description of the aforementioned embodiment, which is not repeated herein.

At step S502, within the time domain interval, the network device 101 does not send the PDCCH on a second carrier group applicable to a cell DTX.

In some possible implementations, the time period during which the network device 101 does not send the PDCCH in the DTX may be considered to be in a non-active time period.

In some possible implementations, the network device 101 is in the first time period of the DTX on the second carrier group, that is, the time domain interval is an interval corresponding to the overlap between the first time period of the DTX of the network device 101 on the second carrier group and the running time period of the first timer.

In this case, the network device 101 does not send the PDCCH on the second carrier group, that is, the energy-saving state can still be maintained on the second carrier group; and the network device 101 sends the PDCCH on a carrier outside the second carrier group, such as the second carrier, so as to retransmit data in time.

In some possible implementations, the UE 102 does not monitor the PDCCH on the second carrier group, such as the UE is in a non-active time period on the second carrier group.

In the embodiments of the present disclosure, within the overlapped time domain interval, the network device 101 may maintain the energy-saving state on the carrier corresponding to the DTX and perform data retransmission scheduling on the other carrier, so that data can be retransmitted in time and the transmission delay can be reduced.

An embodiment of the present disclosure provides a method for not sending a downlink channel, which is performed by the network device 101. With reference to FIG. 6, FIG. 6 shows a flowchart of a method for sending a downlink channel according to an embodiment. As shown in FIG. 6, the method includes step S601, specifically.

At step S601, in a scenario where an overlapped time domain interval exists between a first time period of a DTX and a running time period of a first timer, when the network device 101 is configured with cross-carrier scheduling and a third carrier group is an empty set, the network device 101 does not send a physical downlink control channel (PDCCH) within the overlapped time domain interval.

It can be understood that when the condition in step S601 is not met, the method may further include step S301, and the relevant implementation will not be described in detail here.

In some possible implementations, regarding descriptions of related terms in step S601, reference may be made to the descriptions of steps S201, S301, S401, and S501, which will not be repeated here.

In some possible implementations, the network device 101 is configured wit the DTX.

In some possible implementations, the first time period of the DTX includes any of:
a time period used for not sending at least part of downlink information in the DTX;
a time period during which the network device is in a non-active state in the DTX;
a time period during which the network device is in an off state in the DTX; or
a time period during which the network device is in an energy-saving state in the DTX.

In some possible implementations, the carrier in the third carrier group belongs to the first carrier group applicable to the C-DRX cycle of the UE, but does not belong to the intersection of the first carrier group and the second carrier group applicable to the cell DTX of the network device.

In some possible implementations, regarding the relevant description of the third carrier group, reference may be made to the implementation corresponding to step S501.

If the third carrier group determined according to the first carrier group and the second carrier group is an empty set, it indicates that the network device 101 may be in the first time period on the corresponding carrier and there is no suitable carrier for retransmission scheduling. The network device 101 may not send the PDCCH within this time domain interval to achieve energy saving.

In some possible implementations, the UE 102 does not monitor the PDCCH within the time domain interval, that is, even if the first timer is running, the UE 102 may not monitor the PDCCH temporarily, so as to achieve energy saving of the UE 102.

In an embodiment of the present disclosure, when the network device 101 is configured with cross-carrier scheduling and the third carrier group is an empty set, the network device 101 may not send the PDCCH within the time domain interval, and the UE 102 may not monitor the PDCCH within the time domain interval, thereby achieving energy saving for the network device 101 and the UE 102.

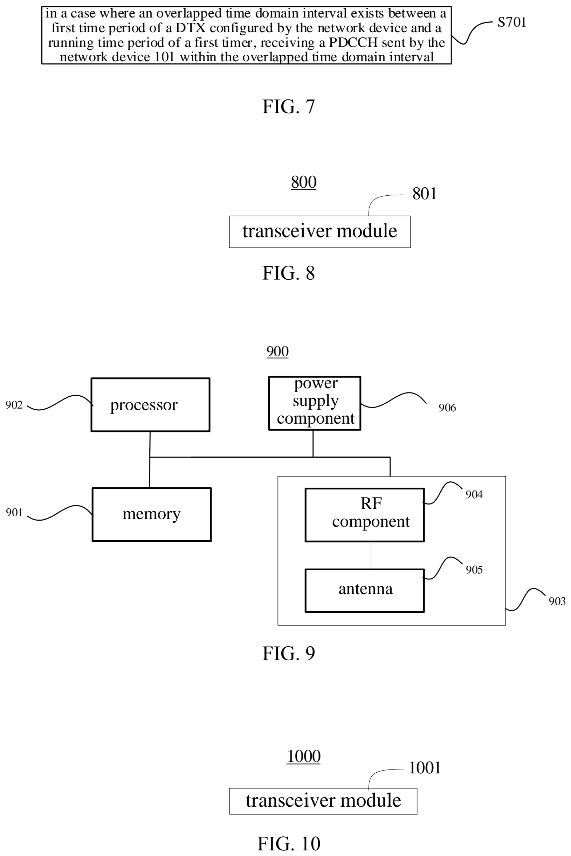

An embodiment of the present disclosure provides a method for sending a downlink channel, which is performed by the UE 102. With reference to FIG. 7, FIG. 7 shows a flowchart of a method for receiving a downlink channel according to an embodiment. As shown in FIG. 7, the method includes step S701, specifically.

At step S701, in a case where an overlapped time domain interval exists between a first time period of a DTX configured by the network device and a running time period of a first timer, the UE 102 receives a physical downlink control channel (PDCCH) sent by the network device 101 within the overlapped time domain interval.

In some implementations, the first time period of the DTX includes any of:
a time period used for not sending at least part of downlink information in the DTX;
a time period during which the network device is in a non-active state in the DTX;
a time period during which the network device is in an off state in the DTX; or
a time period during which the network device is in an energy-saving state in the DTX.

In an example, the first time period is a time period configured in a cell DTX for not sending at least part of downlink information by the network device 101, or is called a DTX-off time period.

In some possible implementations, the first timer is a timer used for a data retransmission in a C-DRX cycle configured for the UE 102.

In some possible implementations, the first timer includes at least one of:
a retransmission timer corresponding to a downlink HARQ process;
a retransmission timer corresponding to an uplink HARQ process.

In some possible implementations, the network device 101 sends the PDCCH within the time domain interval.

In some possible implementations, the PDCCH includes at least a PDCCH for carrying the DCI scheduling the data transmission.

For example, the network device 101 sends a PDCCH for carrying DCI scheduling the data transmission, such as a PDCCH for carrying DCI scheduling the data retransmission, within the time domain interval, and the UE 102 monitors the PDCCH within the time domain interval.

In some possible implementations, the time domain interval includes one of the following:
an overlapped range formed by a partial running time period of the first timer and the first time period; or
an overlapped range formed by an entire running time period of the first timer and the first time period.

In some possible implementations, regarding the implementation of step S701, reference may be made to the relevant implementations in steps S201, S301, S401, S501 and S601, which will not be described in detail here.

In an embodiment of the present disclosure, when the first time period of the DTX of the network device 101 overlaps with the running time period of the first timer in the C-DRX cycle of the UE 102, the UE 102 still monitors the PDCCH within the overlapped time domain interval so as to obtain data transmission scheduling in time, thereby ensuring data transmission performance and low transmission delay.

An embodiment of the present disclosure provides a method for receiving a downlink channel, which is performed by the UE 102. The method includes step S7101, specifically.

At step S7101, in a case where an overlapped time domain interval exists between a first time period of a DTX and a running time period of a first timer and the network device 101 schedules data on a single carrier, the UE 102 receives a physical downlink control channel (PDCCH) sent by the network device 101 on a first carrier within the overlapped time domain interval.

In some possible implementations, the first carrier is a carrier where a data transmission failure exists.

In some possible implementations, regarding the implementation of step S7101, reference may be made to the relevant implementations of steps S701 and S401, which will not be repeated here.

In the embodiments of the present disclosure, when the network device 101 is not configured with cross-carrier scheduling, the UE 102 still monitors the PDCCH on the first carrier where the data transmission failure occurs, so as to obtain the retransmission scheduling of the same data in a timely manner.

An embodiment of the present disclosure provides a method for receiving a downlink channel, which is performed by the UE 102. The method includes step S7201, specifically.

At step S7201, in a case where an overlapped time domain interval exists between a first time period of a DTX and a running time period of a first timer and the network device 101 is configured with cross-carrier scheduling, the UE 102 receives a physical downlink control channel (PDCCH) sent by the network device 101 on a second carrier within the overlapped time domain interval.

In some possible implementations, the second carrier is the same as or different from a first carrier where a data transmission failure exists.

In some possible implementations, the second carrier is a carrier not applicable to a cell DTX of the network device 101.

In some possible implementations, the second carrier is a carrier applicable to a C-DRX cycle of the UE 102.

In some possible implementations, the method further includes step S7201', specifically.

At step S7201', the UE 102 determines a second carrier according to a first carrier group applicable to the C-DRX cycle of the UE 102 and a second carrier group applicable to the cell DTX of the network device 101.

The second carrier is a carrier in a third carrier group. The carrier in the third carrier group belongs to the first carrier group but does not belong to an intersection of the first carrier group and the second carrier group.

In some possible implementations, when the third carrier group is not an empty set, the second carrier is a carrier in the first carrier group.

In some possible implementations, when the first carrier group is an empty set, the second carrier is the same as the first carrier.

In some possible implementations, regarding the implementation of step S7201, reference may be made to the relevant implementation of step S501, which is not repeated here.

In the embodiments of the present disclosure, when the network device 101 is configured with cross-carrier scheduling, the UE 102 may monitor the PDCCH on the carrier other than the first carrier to obtain retransmitted data of the same data on the other carrier.

An embodiment of the present disclosure provides a method for receiving a downlink channel, which is performed by the UE 102. The method includes step S7201 and step S7202, specifically.

At step S7201, in a case where an overlapped time domain interval exists between a first time period of a DTX and a running time period of a first timer and the network device 101 is configured with cross-carrier scheduling, the UE 102 receives a physical downlink control channel (PDCCH) sent by the network device 101 on a second carrier within the overlapped time domain interval.

Regarding the implementation of step S7201, reference may be made to the description of the above embodiments, which will not be repeated here.

At step S7202, within the time domain interval, the UE 102 does not receive the PDCCH on a second carrier group applicable to a cell DTX.

In some possible implementations, regarding the implementation of step S7202, reference may be made to the relevant implementation of step S502, which will not be repeated here.

In this embodiment of the present disclosure, within the overlapped time domain interval, the UE 102 monitors the PDCCH on the second carrier to obtain data retransmission scheduling in time and reduce the transmission delay, and does not monitor the PDCCH on the second carrier group to maintain energy saving effect.

An embodiment of the present disclosure provides a method for not receiving a downlink channel, which is performed by the UE 102. The method includes step S7301, specifically.

At step S7301, in a case where the network device 101 is configured with cross-carrier scheduling and a third carrier group is an empty set, the UE 102 does no receive a physical downlink control channel (PDCCH) within an overlapped time domain interval between a first time period of a DTX configured by the network device 101 and a running time period of a first timer.

In some possible implementations, a carrier in the third carrier group belongs to a first carrier group applicable to a C-DRX cycle of the UE, but does not belong to an intersection of the first carrier group and a second carrier group applicable to a cell DTX of the network device.

In some possible implementations, regarding the implementation of step S7301, reference may be made to the relevant implementation of step S601, which will not be repeated here.

In some possible implementations, the first time period of the DTX includes any of:
a time period used for not sending at least part of downlink information in the DTX;
a time period during which the network device is in a non-active state in the DTX;
a time period during which the network device is in an off state in the DTX; or
a time period during which the network device is in an energy-saving state in the DTX.

In some implementations, the first timer includes at least one of:
a retransmission timer corresponding to a downlink HARQ process; or
a retransmission timer corresponding to an uplink HARQ process.

In some implementations, the PDCCH includes at least a PDCCH used for carrying downlink control information (DCI) scheduling a data transmission.

In this embodiment of the present disclosure, when the network device 101 is configured with cross-carrier scheduling and the first carrier group is an empty set, the UE 102 may not monitor the PDCCH within the time domain interval to achieve energy saving.

Based on the same concept as the above method embodiments, the embodiments of the present disclosure also provide a communication apparatus, which can have the functions of the network device 101 in the above method embodiments, and can be used to execute the steps performed by the network device 101 provided by the above method embodiments. The function can be implemented by hardware, or by software or hardware executing corresponding software. The hardware or software includes one or more modules corresponding to the above functions.

In a possible implementation, the apparatus 800 shown in FIG. 8 may be used as the network device 101 involved in the above method embodiments, and execute the steps performed by the network device 101 in the above method embodiments. As shown in FIG. 8, the apparatus 800 may include a transceiver module 801, in which the transceiver module 801 may be used to support the communication apparatus to communicate.

When the apparatus executes the steps implemented by the network device 101 configuring a discontinuous transmission (DTX), and the transceiver module 801 is configured to send a physical downlink control channel (PDCCH) to a UE within an overlapped time domain interval in a case where the overlapped time domain interval exists between a first time period of the DTX and a running time period of a first timer.

The first timer is used for a data retransmission in a connected discontinuous reception (C-DRX) cycle configured for the UE.

Based on the same concept as the above method embodiments, the embodiments of the present disclosure also provide a communication apparatus, which can have the functions of the network device 101 in the above method embodiments, and can be used to execute the steps performed by the network device 101 provided by the above method embodiments. The function can be implemented by hardware, or by software or hardware executing corresponding software. The hardware or software includes one or more modules corresponding to the above functions.

In a possible implementation, the apparatus 800 shown in FIG. 8 may be used as the network device 101 involved in the above method embodiments, and execute the steps performed by the network device 101 in the above method embodiments. As shown in FIG. 8, the apparatus 800 may include a transceiver module 801, in which the transceiver module 801 may be used to support the communication apparatus to communicate.

When the apparatus executes the steps implemented by the network device 101, the transceiver module 801 is configured to, in a case of being configured with cross-carrier scheduling and a third carrier group being an empty set, not send a physical downlink control channel (PDCCH) within an overlapped time domain interval between a first time period of the DTX and a running time period of a first timer.

A carrier in the third carrier group belongs to a first carrier group applicable to a connected discontinuous reception (C-DRX) cycle of a user equipment (UE) but does not belong to an intersection of the first carrier group and a second carrier group applicable to a cell DTX of the network device.

When the communication apparatus is the network device 101, its structure can also be shown in FIG. 9. Take the base station as an example to illustrate the structure of the communication apparatus. As shown in FIG. 9, the apparatus 900 includes a memory 901, a processor 902, a transceiver component 903, and a power supply component 906. The memory 901 is coupled to the processor 902, and can be used to store programs and data necessary for the communication apparatus 900 to implement various functions. The processor 902 is configured to support the communication apparatus 900 to perform the corresponding functions in the above method, and the functions can be implemented by calling the program stored in the memory 901. The transceiver component 903 can be a wireless transceiver, which can be used to support the communication apparatus 900 to receive signaling and/or data through a wireless air interface, and send signaling and/or data. The transceiver component 903 may also be referred to as a transceiver unit or a communication unit. The transceiver component 903 may include a radio frequency component 904 and one or more antennas 905, in which the radio frequency component 904 may be a remote radio unit (RRU), which may be specifically used for transmitting radio frequency signals and converting the radio frequency signals into baseband signals, and the one or more antennas 905 may be specifically used for radiating and receiving the radio frequency signals.

When the communication apparatus 900 needs to send data, the processor 902 can perform baseband processing on the data to be sent, and then output a baseband signal to the RF unit. The RF unit performs RF processing on the baseband signal and then sends an RF signal in the form of electromagnetic waves through the antenna. When there is data to be sent to the communication apparatus 900, the RF unit receives the RF signal through the antenna, converts the RF signal into a baseband signal, and outputs the baseband signal to the processor 902. The processor 902 converts the baseband signal into data and processes the data.

Based on the same concept as the above method embodiments, the embodiments of the present disclosure also provide a communication apparatus, which can have the functions of the UE 102 in the above method embodiments, and can be used to execute the steps performed by the UE 102 provided by the above method embodiments. The function can be implemented by hardware, or by software or hardware executing corresponding software. The hardware or software includes one or more modules corresponding to the above functions.

In a possible implementation, the apparatus 1000 shown in FIG. 10 may be used as the UE 102 involved in the above method embodiments, and execute the steps performed by the UE 102 in the above method embodiments. As shown in FIG. 10, the apparatus 1000 may include a transceiver module 1001, in which the transceiver module 1001 may be used to support the communication apparatus to communicate.

When the apparatus executes the steps implemented by the UE 102, the transceiver module 1001 is configured to, in a case where an overlapped time domain interval exists between a first time period of a discontinuous transmission (DTX) configured by a network device and a running time period of a first timer, receive a physical downlink control channel (PDCCH) sent by the network device within the overlapped time domain interval.

The first timer is used for a data retransmission in a connected discontinuous reception (C-DRX) cycle configured for the UE.

Based on the same concept as the above method embodiments, the embodiments of the present disclosure also provide a communication apparatus, which can have the functions of the UE 102 in the above method embodiments, and can be used to execute the steps performed by the UE 102 provided by the above method embodiments. The function can be implemented by hardware, or by software or hardware executing corresponding software. The hardware or software includes one or more modules corresponding to the above functions.

In a possible implementation, the apparatus 1000 shown in FIG. 10 may be used as the UE 102 involved in the above method embodiments, and execute the steps performed by the UE 102 in the above method embodiments. As shown in FIG. 10, the apparatus 1000 may include a transceiver module 1001, in which the transceiver module 1001 may be used to support the communication apparatus to communicate.

When the apparatus executes the steps implemented by the UE 102, the transceiver module 1001 is configured to, in a case where a network device is configured with cross-carrier scheduling and a third carrier group is an empty set, not receive a physical downlink control channel (PDCCH) within an overlapped time domain interval between a first time period of a discontinuous transmission (DTX) configured by the network device and a running time period of a first timer.

A carrier in the third carrier group belongs to a first carrier group applicable to a connected discontinuous reception (C-DRX) cycle of the UE but does not belong to an intersection of the first carrier group and a second carrier group applicable to a cell DTX of the network device.

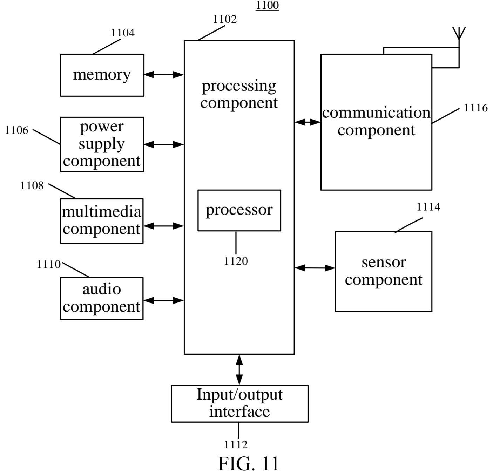

When the communication apparatus is the UE 102, its structure may also be as shown in FIG. 11. Referring to FIG. 11, the apparatus 1100 may include one or more of the following components: a processing component 1102, a memory 1104, a power supply component 1106, a multimedia component 1108, an audio component 1110, an input/output (I/O) interface 1112, a sensor component 1114, and a communication component 1116.

The processing component 1102 typically controls overall operations of the apparatus 1100, such as the operations associated with display, telephone calls, data communications, camera operations, and recording operations. The processing component 1102 may include one or more processors 1120 to execute instructions to implement all or part of the steps in the above described method. Moreover, the processing component 1102 may include one or more modules which facilitate the interaction between the processing component 1102 and other components. For example, the processing component 1102 may include a multimedia module to facilitate the interaction between the multimedia component 1108 and the processing component 1102.

The memory 1104 is configured to store various types of data to support the operation of the apparatus 1100. Examples of such data include instructions for any applications or methods operated on the apparatus 1100, contact data, phonebook data, messages, pictures, videos, etc. The memory 1104 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power supply component 1106 provides power to various components of the apparatus 1100. The power supply component 1106 may include a power management system, one or more power sources, and any other components associated with the generation, management, and distribution of power in the apparatus 1100.

The multimedia component 1108 includes a screen providing an output interface between the apparatus 1100 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of time and a pressure associated with the touch or swipe action. In some embodiments, the multimedia component 1108 includes a front-facing camera and/or a rear-facing camera. When the apparatus 1100 is in an operating mode, such as a shooting mode or a video mode, the front-facing camera and/or the rear-facing camera can receive external multimedia data. Each front-facing camera and rear-facing camera may be a fixed optical lens system or has a focal length and optical zoom capability.

The audio component 1110 is configured to output and/or input audio signals. For example, the audio component 1110 includes a microphone (MIC) configured to receive an external audio signal when the apparatus 1100 is in an operation mode, such as a call mode, a recording mode, and a voice recognition mode. The received audio signal may be further stored in the memory 1804 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the apparatus 1100. For instance, the sensor component 1114 may detect an open/closed status of the apparatus 1100, relative positioning of components, e.g., the display and the keypad, of the apparatus 1100, a change in position of the apparatus 1100 or a component of the apparatus 1100, a presence or absence of user contact with the apparatus 1100, an orientation or an acceleration/deceleration of the apparatus 1100, and a change in temperature of the apparatus 1100. The sensor component 1114 may include a proximity sensor configured to detect the presence of nearby objects without any physical contact. The sensor component 1114 may also include a light sensor, such as a Complementary Metal Oxide Semiconductor (CMOS) or Charge-Coupled Device (CCD) image sensor, for use in imaging applications. In some embodiments, the sensor component 1114 may also include an accelerometer sensor, a gyroscope sensor, a magnetic sensor, a pressure sensor, or a temperature sensor.

The communication component 1116 is configured to facilitate communication, wired or wirelessly, between the apparatus 1100 and other devices. The apparatus 1100 can access a wireless network based on a communication standard, such as Wi-Fi, 2G or 3G or a combination thereof. In an exemplary embodiment, the communication component 1116 receives a broadcast signal from an external broadcast management system or broadcast associated information via a broadcast channel. In an exemplary embodiment, the communication component 1116 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In the exemplary embodiment, the apparatus 1100 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above method for reporting location-related information.

**In** an exemplary embodiment, there is also provided a non-transitory computer readable storage medium including instructions, such as the memory 1104. The above instructions may be executed by the processor 1120 in the apparatus 1100, for performing the above method for reporting location-related information. For example, the non-transitory computer-readable storage medium may be a ROM, a Random Access Memory (RAM), a CD-ROM, a magnetic tape, a floppy disc, and an optical data storage device.

Other embodiments of the disclosure will be apparent to those skilled in the art from consideration of the specification and practice of the disclosure disclosed here. The disclosure is intended to cover any variations, usages, or adaptations of the embodiments of the disclosure following the general principles thereof and including such departures from the disclosure as come within known or customary practice in the art. It is intended that the specification and embodiments are considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

### Industrial Applicability

In the method of the present disclosure, when the first time period of the DTX of the network device overlaps with the running time period of the first timer in the C-DRX cycle of the UE, the network device still sends the PDCCH in the overlapped time domain interval, and the UE monitors the PDCCH within the time domain interval so as to still obtain data transmission scheduling in the time domain interval, thereby ensuring data transmission performance and lower transmission delay.

## Claims

1. A method for sending a downlink channel, performed by a network device configuring a discontinuous transmission (DTX), comprising:
in a case where an overlapped time domain interval exists between a first time period of the DTX and a running time period of a first timer, sending a physical downlink control channel (PDCCH) to a user equipment (UE) within the overlapped time domain interval;
wherein the first timer is used for a data retransmission in a connected discontinuous reception (C-DRX) cycle configured for the UE.

2. The method of claim 1, wherein the first time period of the DTX comprises any of:
a time period used for not sending at least part of downlink information in the DTX;
a time period during which the network device is in a non-active state in the DTX;
a time period during which the network device is in an off state in the DTX; or
a time period during which the network device is in an energy-saving state in the DTX.

3. The method of claim 1 or 2, wherein in a case where the network device performs single-carrier scheduling, sending the PDCCH to the UE within the overlapped time domain interval comprises:
sending the PDCCH to the UE on a first carrier within the overlapped time domain interval, wherein the first carrier is a carrier where a data transmission failure exists.

4. The method of claim 1 or 2, wherein in a case where the network device is configured with cross-carrier scheduling, sending the PDCCH to the UE within the overlapped time domain interval comprises:
sending the PDCCH to the UE on a second carrier within the overlapped time domain interval, wherein the second carrier is the same as or different from a first carrier where a data transmission failure exists.

5. The method of claim 4, wherein
the second carrier is a carrier not applicable to a cell DTX of the network device.

6. The method of claim 5, wherein
the second carrier is a carrier applicable to the C-DRX cycle of the UE.

7. The method of any of claims 4-6, further comprising:
determining the second carrier according to a first carrier group applicable to the C-DRX cycle of the UE and a second carrier group applicable to a cell DTX of the network device, wherein the second carrier is a carrier in a third carrier group, and the carrier in the third carrier group belongs to the first carrier group but does not belong to an intersection of the first carrier group and the second carrier group.

8. The method of claim 7, wherein
in a case where the third carrier group is an empty set, the second carrier is the same as the first carrier.

9. The method of any of claims 4-8, further comprising:
not sending the PDCCH on a second carrier group applicable to a cell DTX of the network device within the overlapped time domain interval.

10. The method of any of claims 1-9, wherein the first timer comprises at least one of:
a retransmission timer corresponding to a downlink hybrid automatic repeat request (HARQ) process; or
a retransmission timer corresponding to an uplink HARQ process.

11. The method of any of claims 1-9, wherein
the PDCCH comprises at least a PDCCH used for carrying downlink control information (DCI) scheduling a data transmission.

12. A method for not sending a downlink channel, performed by a network device configuring a discontinuous transmission (DTX), comprising:
in a case of being configured with cross-carrier scheduling and a third carrier group being an empty set, not sending a physical downlink control channel (PDCCH) within an overlapped time domain interval between a first time period of the DTX and a running time period of a first timer;
wherein a carrier in the third carrier group belongs to a first carrier group applicable to a connected discontinuous reception (C-DRX) cycle of a user equipment (UE) but does not belong to an intersection of the first carrier group and a second carrier group applicable to a cell DTX of the network device.

13. The method of claim 12, wherein the first timer comprises at least one of:
a retransmission timer corresponding to a downlink hybrid automatic repeat request (HARQ) process; or
a retransmission timer corresponding to an uplink HARQ process.

14. The method of claim 12, wherein
the PDCCH comprises at least a PDCCH used for carrying downlink control information (DCI) scheduling a data transmission.

15. A method for receiving a downlink channel, performed by a user equipment (UE), comprising:
in a case where an overlapped time domain interval exists between a first time period of a discontinuous transmission (DTX) configured by a network device and a running time period of a first timer, receiving a physical downlink control channel (PDCCH) sent by the network device within the overlapped time domain interval;
wherein the first timer is used for a data retransmission in a connected discontinuous reception (C-DRX) cycle configured for the UE.

16. The method of claim 15, wherein the first time period of the DTX comprises any of:
a time period used for not sending at least part of downlink information in the DTX;
a time period during which the network device is in a non-active state in the DTX;
a time period during which the network device is in an off state in the DTX; or
a time period during which the network device is in an energy-saving state in the DTX.

17. The method of claim 15 or 16, wherein in a case where the network device performs single-carrier scheduling, receiving the PDCCH sent by the network device within the overlapped time domain interval comprises:
receiving the PDCCH sent by the network device on a first carrier within the overlapped time domain interval, wherein the first carrier is a carrier where a data transmission failure exists.

18. The method of claim 15 or 16, wherein in a case where the network device is configured with cross-carrier scheduling, receiving the PDCCH sent by the network device within the overlapped time domain interval comprises:
receiving the PDCCH sent by the network device on a second carrier within the overlapped time domain interval, wherein the second carrier is the same as or different from a first carrier where a data transmission failure exists.

19. The method of claim 18, wherein
the second carrier is a carrier not applicable to a cell DTX of the network device.

20. The method of claim 19, wherein
the second carrier is a carrier applicable to the C-DRX cycle of the UE.

21. The method of any of claims 18-20, further comprising:
determining the second carrier according to a first carrier group applicable to the C-DRX cycle of the UE and a second carrier group applicable to a cell DTX of the network device, wherein the second carrier is a carrier in a third carrier group, and the carrier in the third carrier group belongs to the first carrier group but does not belong to an intersection of the first carrier group and the second carrier group.

22. The method of claim 21, wherein
in a case where the third carrier group is an empty set, the second carrier is the same as the first carrier.

23. The method of any of claims 18-22, further comprising:
not receiving the PDCCH on a second carrier group applicable to a cell DTX of the network device within the overlapped time domain interval.

24. The method of any of claims 1-23, wherein the first timer comprises at least one of:
a retransmission timer corresponding to a downlink hybrid automatic repeat request (HARQ) process; or
a retransmission timer corresponding to an uplink HARQ process.

25. The method of any of claims 1-23, wherein
the PDCCH comprises at least a PDCCH used for carrying downlink control information (DCI) scheduling a data transmission.

26. A method for not receiving a downlink channel, performed by a user equipment (UE), comprising:
in a case where a network device is configured with cross-carrier scheduling and a third carrier group is an empty set, not receiving a physical downlink control channel (PDCCH) within an overlapped time domain interval between a first time period of a discontinuous transmission (DTX) configured by the network device and a running time period of a first timer;
wherein a carrier in the third carrier group belongs to a first carrier group applicable to a connected discontinuous reception (C-DRX) cycle of the UE but does not belong to an intersection of the first carrier group and a second carrier group applicable to a cell DTX of the network device.

27. The method of claim 26, wherein the first timer comprises at least one of:
a retransmission timer corresponding to a downlink hybrid automatic repeat request (HARQ) process; or
a retransmission timer corresponding to an uplink HARQ process.

28. The method of claim 26, wherein
the PDCCH comprises at least a PDCCH used for carrying downlink control information (DCI) scheduling a data transmission.

29. A communication apparatus, configured in a network device configuring a discontinuous transmission (DTX), comprising:
a transceiver module, configured to, in a case where an overlapped time domain interval exists between a first time period of the DTX and a running time period of a first timer, send a physical downlink control channel (PDCCH) to a user equipment (UE) within the overlapped time domain interval;
wherein the first timer is used for a data retransmission in a connected discontinuous reception (C-DRX) cycle configured for the UE.

30. A communication apparatus, configured in a network device configuring a discontinuous transmission (DTX), comprising:
a transceiver module, configured to, in a case of being configured with cross-carrier scheduling and a third carrier group being an empty set, not send a physical downlink control channel (PDCCH) within an overlapped time domain interval between a first time period of the DTX and a running time period of a first timer;
wherein a carrier in the third carrier group belongs to a first carrier group applicable to a connected discontinuous reception (C-DRX) cycle of a user equipment (UE) but does not belong to an intersection of the first carrier group and a second carrier group applicable to a cell DTX of the network device.

31. A communication apparatus, configured in a user equipment (UE), comprising:
a transceiver module, configured to, in a case where an overlapped time domain interval exists between a first time period of a discontinuous transmission (DTX) configured by a network device and a running time period of a first timer, receive a physical downlink control channel (PDCCH) sent by the network device within the overlapped time domain interval;
wherein the first timer is used for a data retransmission in a connected discontinuous reception (C-DRX) cycle configured for the UE.

32. A communication apparatus, configured in a user equipment (UE), comprising:
a transceiver module, configured to, in a case where a network device is configured with cross-carrier scheduling and a third carrier group is an empty set, not receive a physical downlink control channel (PDCCH) within an overlapped time domain interval between a first time period of a discontinuous transmission (DTX) configured by the network device and a running time period of a first timer;
wherein a carrier in the third carrier group belongs to a first carrier group applicable to a connected discontinuous reception (C-DRX) cycle of the UE but does not belong to an intersection of the first carrier group and a second carrier group applicable to a cell DTX of the network device.

33. A network device, comprising: a processor and a memory,
wherein the memory is configured to store a computer program,
the processor is configured to execute the computer program to perform the method of any one of claims 1 to 11 or 12-14.

34. A user equipment, comprising: a processor and a memory,
wherein the memory is configured to store a computer program,
the processor is configured to execute the computer program to perform the method of any one of claims 15 to 25 or 26-28.

35. A computer-readable storage medium having instructions stored thereon, wherein when the instructions are executed by a computer, the computer is caused to perform the method of any one of claims 1 to 11 or 12-14.

36. A computer-readable storage medium having instructions stored thereon, wherein when the instructions are executed by a computer, the computer is caused to perform the method of any one of claims 15 to 25 or 26-28.
